# EUROPEAN PATENT APPLICATION

(11) **EP 4 650 258 A1**
(43) Date of publication of application: **19.11.2025**
(21) Application number: 24176503.1
(22) Date of filing: 17.05.2024
(51) Int. Cl.: B62J 7/04, B62J 7/06, B62K 25/02

(54) **BICYCLE WHEEL AXLE RACK KIT**

(71) Applicant: Tsai Jung Enterprise Co., Ltd., Changhua County 509004 (TW)
(72) Inventor: Chiu, Chih-Wen, 509004 Shengang Township, Changhua County (TW); Chung, Shih-Che, 509004 Shengang Township, Changhua County (TW); Lai, Wei-Sheng, 509004 Shengang Township, Changhua County (TW)
(74) Representative: Cabinet Chaillot

(57) **Abstract**

The present invention provides a bicycle (100) wheel axle (2) rack (1) kit, characterized in that it comprises a rack (1) that includes a cargo placement section (11) and supporting sections (12) respectively connected to both sides of the cargo placement section (11), each of the supporting sections (12) having a perforation (121) at one end thereof away from the cargo placement section (11); a wheel axle (2) having connection holes (21) respectively at both ends thereof; and a plurality of connectors (3), each detachably inserted through the perforation (121) of the respective supporting section (12) and the corresponding connection hole (21) of the wheel axle (2). Accordingly, consumers only need to remove the original bicycle (100) wheel axle (2) and replace it with the wheel axle (2) provided by the present invention. This allows the connectors (3) to be inserted through the perforations (121) of the supporting sections (12) and the corresponding connection holes (21) of the wheel axle (2), enabling the rack (1) of the present invention to be installed on the bicycle (100) without the need to drill holes in the frame.

## Description

### BACKGROUND OF THE INVENTION

### Fields of the invention

The present invention relates to a bicycle wheel axle rack kit, including a wheel axle and a rack capable of being fixed to the wheel axle.

### Descriptions of Related Art

Bicycles are excellent transportation vehicles, commonly used for commuting, exercising, and various other purposes. However, unlike other common transportation vehicles with storage space (such as trunks of motorcycles or cars), bicycles lack storage space and thus are inconvenient for carrying goods and luggage. To address this issue, installing racks on bicycle frames to accommodate goods and luggage is quite common.

There are many types of bicycle racks to meet different users' needs. For example, rear racks at the rear end of bicycles generally are positioned above the rear wheel and primarily used to store larger and heavier items such as luggage, backpacks, etc. Alternatively, front racks at the front end of bicycles are positioned in front of the fork and typically used to store smaller and lighter items such as loose products, canned beverages, tools, etc.

However, since bicycle racks are not essential for the operation of bicycles, bicycle manufacturers do not pre-set holes or structures for rack installation during bicycle production. Therefore, when consumers install racks on bicycles, whether front or rear racks, they need to drill corresponding holes based on the shape of the frame to facilitate rack installation. Nevertheless, drilling holes in the frame is undoubtedly irreversible damage and results in permanent aesthetic damage. If racks are removed in the future, the drilled holes are exposed on the frame, resulting in an unsightly appearance. Furthermore, if the rack style is changed and the original holes cannot be utilized, new holes will need to be drilled.

Considering the points discussed above, it is evident that common bicycle racks available on the market necessitate drilling holes into the frame during installation, presenting an issue. Thus, it is crucial to rectify this drawback to offer consumers an improved user experience with bicycle racks.

### SUMMARY OF THE INVENTION

The objective of the present invention is to address the issues of conventional products and provides a kit comprising a rack and a wheel axle. The wheel axle is sized to fit the standard dimensions of bicycles on the market. Although the wheel axle provided by the present invention conforms to standard dimensions, it possesses a structure not found in conventional products, namely, connection holes at its both ends. Additionally, each of the supporting sections of the rack in the present invention also features a perforation corresponding to a respective one of the connection holes. Therefore, upon purchasing the kit of the present invention, consumers only need to remove the original bicycle wheel axle and replace it with the wheel axle provided by the present invention. This allows the connectors to be inserted through the perforations of the supporting sections and the corresponding connection holes of the wheel axle, enabling the rack of the present invention to be installed on the bicycle without the need to drill holes in the frame. Compared to traditional bicycle racks that require drilling holes in the frame during installation, the present invention effectively addresses the aforementioned problem, providing consumers with a better user experience with bicycle racks. The present invention indeed has novelty and inventive step.

To achieve the above objectives and effects, the present invention provides a bicycle wheel axle rack kit, characterized in that it comprises a rack that includes a cargo placement section and supporting sections respectively connected to both sides of the cargo placement section, each of the supporting sections having a perforation at one end thereof away from the cargo placement section; a wheel axle having connection holes respectively at both ends thereof; and a plurality of connectors, each detachably inserted through the perforation of the respective supporting section and the corresponding connection hole of the wheel axle.

In the present invention, each of the connection holes contains threads therein, and the plurality of the connectors features a screw-like configuration with threads.

In the present invention, the cargo placement section features an L-shaped configuration.

### BRIEF DESCRIPTION OF THE DRAWINGS

FIG. 1 is a perspective schematic view of the present invention.
FIG. 2 is an exploded schematic view of the present invention.
FIG. 3 is a cross-sectional schematic view taken along the line III-III of FIG. 1.
FIG. 4 is a schematic view of the actual application of the present invention on a rear wheel of a bicycle.
FIG. 5 is a cross-sectional schematic view taken along the line IV-IV of FIG. 4.
FIG. 6 is a schematic view of the actual application of the present invention on a front wheel of a bicycle.

### DETAILED DESCRIPTION OF THE PREFERRED EMBODIMENT

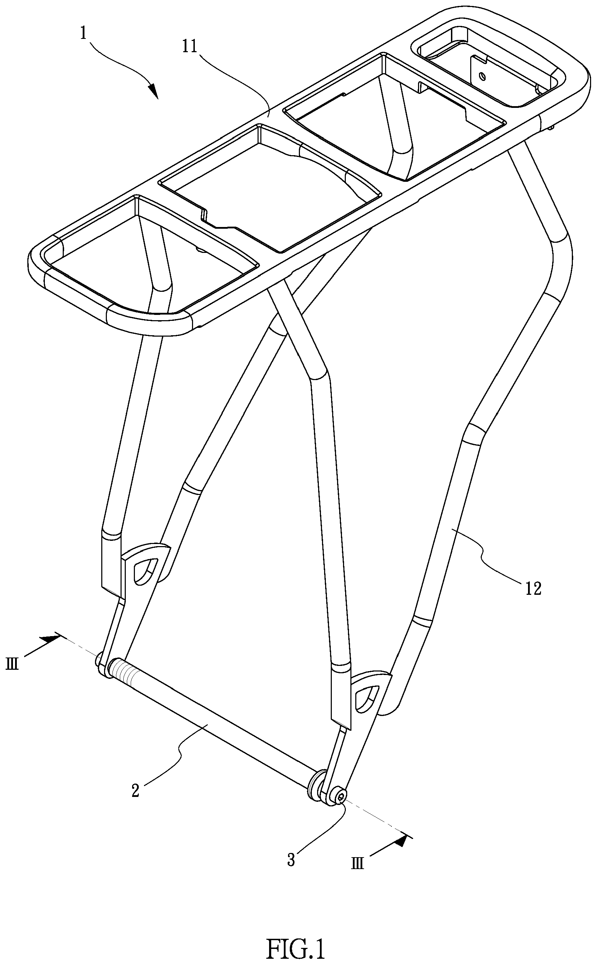

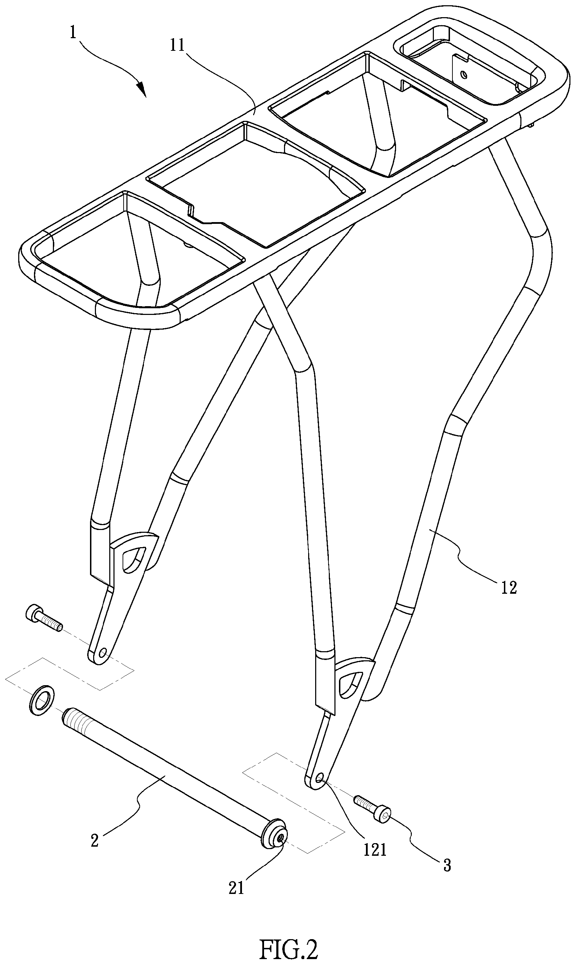

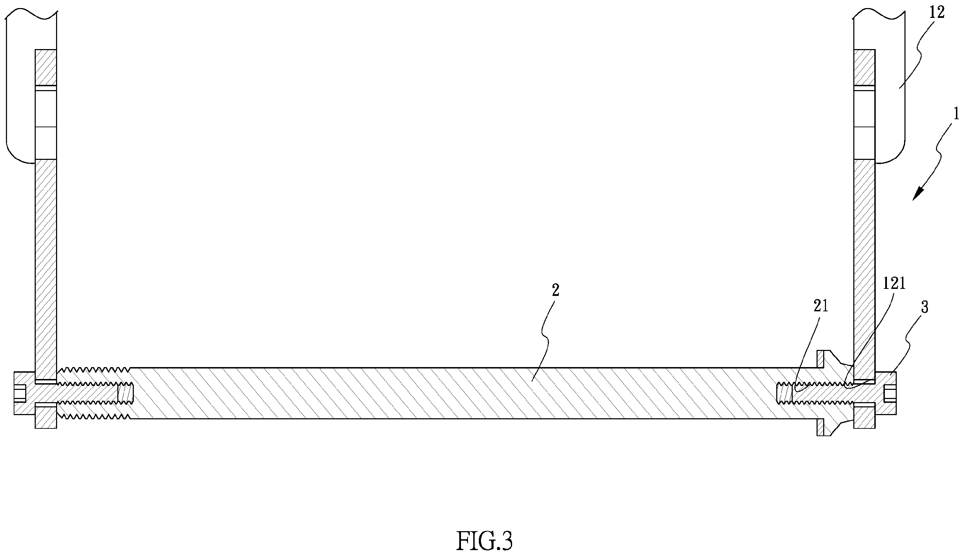

The embodiments of the present invention can be fully understood by referring to the accompanying figures. As shown in FIGS. 1 to 3, the present invention provides a bicycle wheel axle rack kit, characterized in that it comprises a rack 1 including a cargo placement section 11 and supporting sections 12 respectively connected to both sides of the cargo placement section 11, each supporting section 12 having a perforation 121 at one end thereof away from the cargo placement section 11; a wheel axle 2 having connection holes 21 respectively at both ends thereof; and a plurality of connectors 3, each detachably inserted through the perforation 121 of the respective supporting section 12 and the corresponding connection hole 21 of the wheel axle 2.

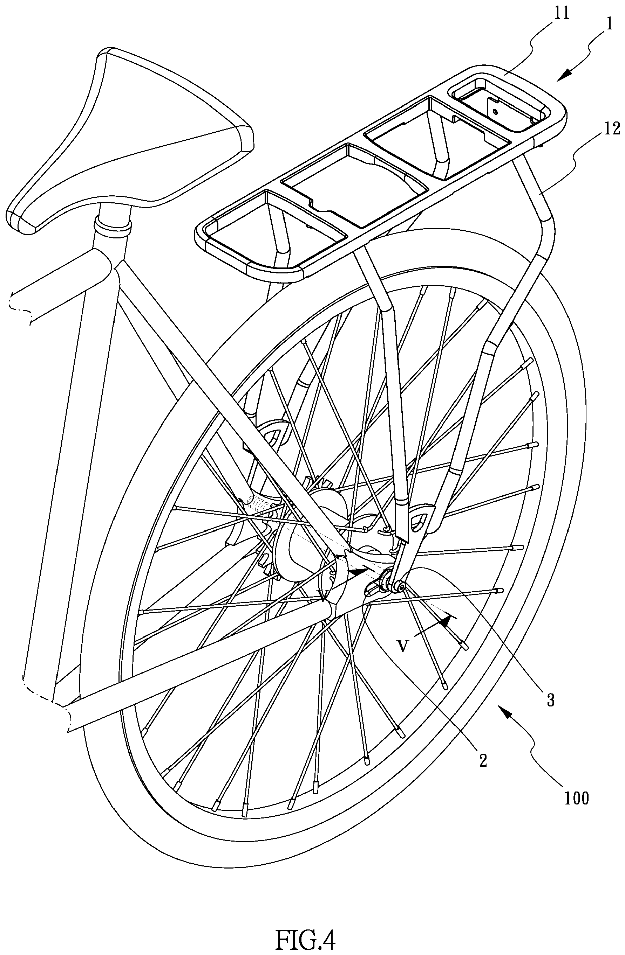

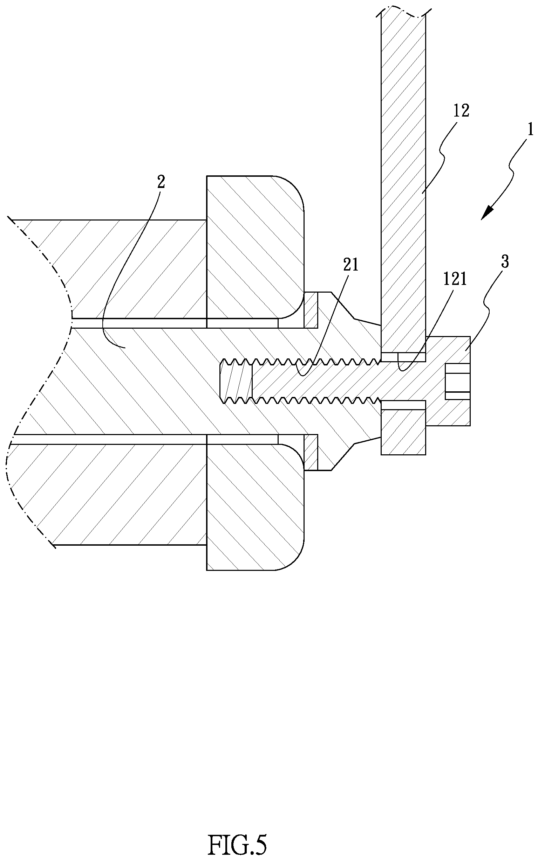

Continuing with a detailed description of the embodiments of the present invention, the present invention provides a kit designed to address the limitations of conventional products. This kit comprises a rack 1 and a wheel axle 2. The wheel axle 2 is sized to fit the standard dimensions of bicycles 100 on the market. Although the wheel axle 2 provided by the present invention conforms to standard dimensions, it possesses a structure not found in conventional products, namely, connection holes 21 at its both ends. Each of the supporting sections 12 of the rack 1 in the present invention also features the perforation 121 corresponding to a respective one of the connection holes 21. Therefore, upon purchasing the kit of the present invention, customers can assemble the components of the kit as depicted in FIGS. 4 and 5. While this embodiment illustrates installation on the rear wheel of a bicycle 100 as an example of the present invention, it is worth noting that it can also be applied to the front wheel of a bicycle 100, depending on the configuration of the rack 1. First, the original wheel axle of the bicycle 100 is removed and replaced with the wheel axle 2 provided by the present invention. Subsequently, the connectors 3 can be inserted through the perforations 121 of the supporting sections 12 and the corresponding connection holes 21 of the axle shaft 2, enabling the rack 1 of the present invention to be installed on the bicycle 100 without the need to drill holes in the frame. Compared to traditional bicycle racks that require drilling holes in the frame during installation, the present invention effectively addresses the aforementioned problem, providing consumers with a better user experience with bicycle racks. The present invention indeed has novelty and inventive step.

Furthermore, as can be inferred from the preceding description, since the dimensions of the wheel axle 2 provided by the present invention are standardized, it can be seamlessly replaced on the bicycle 100 without necessitating modifications to the original structure of the bicycle frame. This facilitates the subsequent installation of the rack 1 of the present invention. Therefore, while achieving inventive step and novelty, the present invention still maintains the versatility of the product, making it a breakthrough in the bicycle rack industry.

Furthermore, the configurations of the connection holes 21 and connectors 3 in this embodiment are provided to demonstrate that the present invention meets enablement requirement. Each of the connection holes 21 contains threads therein, while the plurality of connectors 3 features a screw-like configuration with threads. However, the configurations of the connection holes 21 and the connectors 3 in this embodiment are for illustrative purposes and are not limited to the aforementioned configurations. In practice, they can be replaced with equivalent structural combinations according to the needs of designers and consumers, such as expansion pins, plugs, etc.

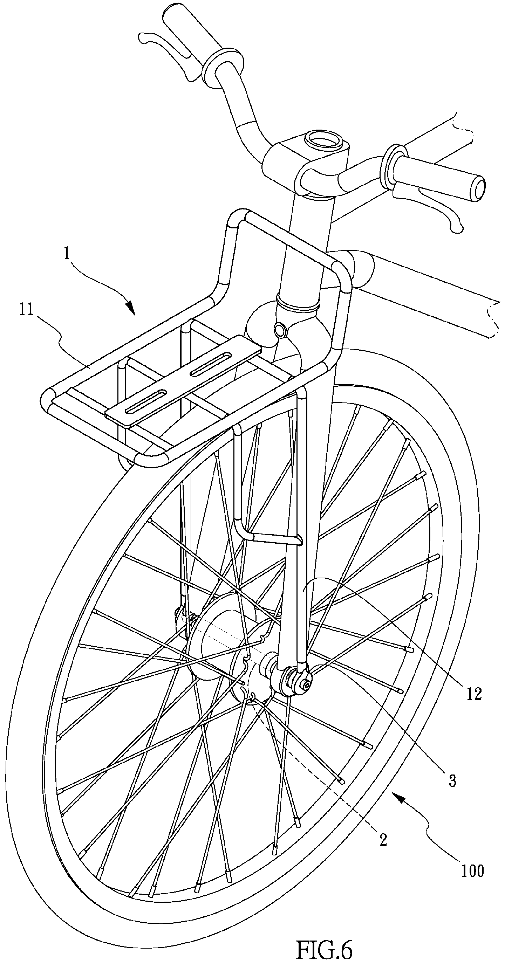

Furthermore, as shown in FIG. 6, the implementation of the present invention applied to the front wheel of a bicycle 100 is provided, where the cargo placement section 11 features an L-shaped configuration.

## Claims

1. A bicycle wheel axle rack kit, **characterized in that** the bicycle wheel axle rack kit comprises:
a rack (1), which includes a cargo placement section (11) and supporting sections (12) respectively connected to both sides of the cargo placement section (11), each of the supporting sections (12) having a perforation (121) at one end thereof away from the cargo placement section (11);
a wheel axle (2) having connection holes (21) respectively at both ends thereof; and
a plurality of connectors (3), each detachably inserted through the perforation (121) of the respective supporting section (12) and the corresponding connection hole (21) of the wheel axle (2).

2. The bicycle wheel axle rack kit as claimed in claim 1, wherein each of the connection holes contains threads therein, and the plurality of the connectors (3) features a screw-like configuration with threads.

3. The bicycle wheel axle rack kit as claimed in claim 1, wherein the cargo placement section (11) features an L-shaped configuration.
